(19) Europäisches Patentamt
European Patent Office
Office européen des brevets

(11) **EP 2 310 163 B1**

(12) **EUROPÄISCHE PATENTSCHRIFT**

(45) Veröffentlichungstag und Bekanntmachung des Hinweises auf die Patenterteilung:
**15.01.2014  Patentblatt 2014/03**

(21) Anmeldenummer: **09768834.5**

(22) Anmeldetag: **26.06.2009**

(51) Int Cl.:
**B23K 26/38** *(2006.01)*        **B23K 26/14** *(2006.01)*
**B23K 26/04** *(2006.01)*        **B23K 26/03** *(2006.01)*

(86) Internationale Anmeldenummer:
**PCT/DE2009/000911**

(87) Internationale Veröffentlichungsnummer:
**WO 2009/155910 (30.12.2009 Gazette 2009/53)**

(54) **VERFAHREN ZUM EXZENTRISCHEN AUSRICHTEN EINES LASERSCHNEIDSTRAHLS ZU EINER DÜSENACHSE UND ZUM SCHRÄGSCHNEIDEN; ENTSPRECHENDE LASERBEARBEITUNGSKOPF UND LASERBEARBEITUNGSMASCHINE**

METHOD FOR ECCENTRICALLY ORIENTING A LASER CUTTING BEAM IN RELATION TO A NOZZLE AXIS AND FOR CUTTING AT AN ANGLE; CORRESPONDING LASER MACHINING HEAD AND LASER MACHINING TOOL

PROCÉDÉ D'ORIENTATION EXCENTRÉE D'UN FAISCEAU LASER PAR RAPPORT À UN AXE DE BUSE ET DE DÉCOUPAGE OBLIQUE, TÊTE D'USINAGE LASER ET MACHINE D'USINAGE LASER CORRESPONDANTES

(84) Benannte Vertragsstaaten:
**AT BE BG CH CY CZ DK EE ES FI FR GB GR HR HU IE IS IT LI LT LU LV MC MK MT NL NO PL PT RO SE SI SK TR**

(30) Priorität: **28.06.2008   DE 102008030783**

(43) Veröffentlichungstag der Anmeldung:
**20.04.2011   Patentblatt 2011/16**

(73) Patentinhaber: **TRUMPF Werkzeugmaschinen GmbH + Co. KG**
**71254 Ditzingen (DE)**

(72) Erfinder:
• **SEPP, Florian**
  **86972 Altenstadt (DE)**
• **METSCH, Volker**
  **74379 Ingersheim (DE)**

(74) Vertreter: **Rupp, Stefan Uli**
**Kohler Schmid Möbus**
**Patentanwälte**
**Ruppmannstraße 27**
**D-70565 Stuttgart (DE)**

(56) Entgegenhaltungen:
**JP-A- 5 057 470     JP-A- 6 039 571**

• **WILLACH J ET AL: "Melt expulsion by a coaxial gas jet in trepanning of CMSX-4 with microsecond Nd:YAG laser radiation" PROCEEDINGS OF THE SPIE - THE INTERNATIONAL SOCIETY FOR OPTICAL ENGINEERING, SPIE, US, Bd. 5063, 1. Januar 2003 (2003-01-01), Seiten 435-440, XP009125580 ISSN: 0277-786X in der Anmeldung erwähnt**

## Beschreibung

Die vorliegende Erfindung betrifft ein Verfahren zum Laserstrahlschrägschneiden eines Werkstücks, bei dem ein aus einer Schneidgasdüse austretender Überschall-Schneidgasstrom unter einem Schrägschneidwinkel zur Werkstückoberfläche ausgerichtet wird, und bei dem das Werkstück und der Laserschneidstrahl beim Laserstrahlschrägschneiden relativ zueinander bewegt werden, wobei der Schrägschneidwinkel rechtwinklig zu einer Vorschubrichtung verläuft. Die Erfindung betrifft auch eine Laserbearbeitungsmaschine zum Laserstrahlschrägschneiden eines Werkstücks, umfassend: eine unter einem Schrägschneidwinkel relativ zu einer Werkstückoberfläche ausrichtbare Schneidgasdüse zur Erzeugung eines Überschall-Schneidgasstroms, eine Bewegungseinrichtung zur Bewegung des Werkstücks und des Laserschneidstrahls relativ zueinander unter einem rechtwinklig zu einer Vorschubrichtung verlaufenden Schrägschneidwinkel, und einen Laserbearbeitungskopf zum Positionieren eines Laserschneidstrahls an einer Position auf der Werkstückoberfläche.

Um zwei insbesondere rohrförmige Werkstücke unter Ausbildung eines Winkels von z.B. 90° miteinander zu verbinden, können diese zunächst schräg unter einem Winkel von 45° abgetrennt und anschließend an den Schnittkanten miteinander verschweißt werden. Für das Schweißen sollten die Schnittkanten möglichst flächig aneinander anliegen, was jedoch nicht möglich ist, wenn der Laserschneidstrahl während des Schneidvorgangs senkrecht zur Flächennormalen der Werkstückoberfläche ausgerichtet ist, da in diesem Fall beim Trennen verwundene Schnittflächen entstehen. Um dies zu vermeiden, wird beim sog. Laserstrahlschrägschneiden der Laserschneidstrahl und der das Laserschneiden unterstützende Überschall-Schneidgasstrom unter einem Winkel zur Flächennormalen geneigt, dem sog. Schrägschneidwinkel. Wird der Schrägschneidwinkel während des Schneidprozesses variiert, kann auch bei einem schrägen Schnitt an einem Rohr eine plane Schnittfläche erzeugt werden, so dass das Verschweißen der Schnittkanten wesentlich vereinfacht wird. Es versteht sich, dass das Schrägschneiden nicht nur an rohrförmigen, sondern auch insbesondere an dicken, plattenförmigen Werkstücken vorgenommen werden kann, um diese an den beim Schrägschneiden gebildeten, schrägen Schnittkanten leichter miteinander verschweißen zu können.

Der oben beschriebene Laserstrahlschrägschneidprozess ist aber bis jetzt noch keineswegs beherrscht, d.h. es muss mit deutlichen Vorschubsreduzierungen (bei einem Schrägschneidwinkel von 45° bis zu 70%) und deutlichen Qualitätseinbußen gegenüber dem konventionellen Laserstrahlschneiden mit senkrecht zur Werkstückoberfläche ausgerichtetem Laserschneidstrahl gerechnet werden. Insbesondere wiesen die beim Laserstrahlschrägschneiden erzeugten Schnittkanten in Abhängigkeit vom Schrägschneidwinkel unterschiedliche Oberflächengüten auf, wobei an einer Schnittkante eine starke Gratbildung, an der anderen Schnittkante eine raue Oberflächenstruktur zu beobachten ist.

D2 JP05057470, die dem Oberbegriff von Anspruch 1 zugrundeliegt, offenbart ein bekanntes Verfahren zum Laserstrahlschrägschneiden eines werkstücks.

Aus dem Artikel "Melt Expulsion by a Coaxial Gas Jet in Trepanning of CMSX-4 with Microsecond Nd: YAG Laser Radiation" von J. Willach et al., Proceedings of the SPIE, Vol. 5063, pp. 435 - 440, ist es bekannt, beim Trepanieren von Mikrobohrungen in Turbinenschaufeln den unter einem Schrägschneidwinkel zum Werkstück ausgerichteten Laserschneidstrahl und den parallel zu diesem ausgerichteten Überschall-Schneidgasstrom bzw. die Schneidgasdüse lateral zueinander zu ver-schieben, um den Stagnationspunkt bzw. das Hochdruckgebiet des Überschall-Schneidgasstroms unmittelbar über der Bohrung zu positionieren. Auf diese Weise soll verhindert werden, dass der Gasdruck und die Dicke der erstarrten Schmelze periodisch entlang der Wand der Bohrung variieren, wie dies bei koaxialer Ausrichtung von Gasströmung und Laserstrahlachse der Fall ist. Durch den Lateralversatz sollen diese Oszillationen unterbunden und ein erhöhter Gasfluss durch die Bohrung und damit ein leichterer Austritt der Schmelze an der Unterseite der Bohrung erreicht werden. Um eine durch Trepanieren erhaltene Bohrung zu vergrößern, wird eine weitere Bohrung mit Überlappung daneben platziert, wobei sich Überlappungen zwischen den Bohrungen im Bereich zwischen 50% und 80 % als besonders günstig ergeben haben.

### Aufgabe der Erfindung

Es ist die Aufgabe der vorliegenden Erfindung, ein Verfahren zum Laserstrahlschrägschneiden sowie eine Laserbearbeitungsmaschine zur Durchführung des Verfahrens dahingehend weiterzubilden, dass ein qualitativ hochwertiger Schnitt bei hohen Vorschubgeschwindigkeiten ermöglicht wird.

### Gegenstand der Erfindung

Diese Aufgabe wird erfindungsgemäß gelöst durch ein Verfahren der eingangs genannten Art, bei dem während der Relativbewegung die Position des Laserschneidstrahls auf der Werkstückoberfläche so eingestellt wird, dass der Laserschneidstrahl in einem innerhalb des Überschall-Schneidgasstroms gebildeten Hochdruckbereich auf die Werkstückoberfläche auftrifft. Die Position des Hochdruckbereichs innerhalb des Überschall-Schneidgasstroms ist hierbei vom sich ggf. während des Laserschneidens verändernden Schrägschneidwinkel abhängig. Der Hochdruckbereich und damit die Position des Laserschneidstrahls auf der Werkstückoberfläche sind hierbei für Winkel, bei denen der Laserschneidstrahl nicht senkrecht zur Werkstückoberfläche ausgerichtet ist, zur Düsenachse der Schneidgasdüse, welche dem Zentrum des Überschall-Schneidgasstroms entspricht, versetzt.

Die Erfinder haben erkannt, dass ein Versatz zwischen Laserschneidstrahl und Zentrum des Überschall-Schneidgasstroms nicht nur bei der Erzeugung von Bohrungen (Trepanieren) günstig ist, sondern auch beim Laserstrahlschrägschneiden, d.h. bei einer Vorschubbewegung zwischen Werkstück und Laserschneidstrahl, da in diesem Fall die Schneidgasdynamik den limitierenden Faktor darstellt: Ein Großteil des Schneidgases strömt an der schräg zum Überschall-Schneidgasstrom verlaufenden Werkstückoberfläche ab und steht somit dem Schneidprozess nicht mehr zur Verfügung, weshalb das hierbei erzeugte statische Druckniveau im Schnittspalt zu gering ist.

Durch Erzeugen eines gewollten Versatzes (Exzentrizität) zwischen dem Laserschneidgasstrahl und dem Zentrum des Überschall-Schneidgasstroms lässt sich eine Verschiebung des Schnittspalts in einen strömungstechnisch günstigeren Bereich erzielen. Die Verschiebung des Laserschneidstrahls bzw. des Schnittspalts findet dabei rechtwinklig zur Vorschubrichtung und um einen definierten Wert statt, der vom (variablen) Schrägschneidwinkel abhängt. Die auf diese Weise verbesserte Einkopplung des Überschall-Schneidgasstroms in den Schnittspalt hat eine Steigerung des statischen Druckniveaus im Schnittspalt um mehrere Größenordnungen zur Folge. Beispielhafte numerische Strömungsberechnungen ergaben im Vergleich zur bisherigen Verfahrensvariante eine Steigerung um ca. 350%. Eine Erhöhung des statischen Druckniveaus im Schnittspalt hat nachweislich einen verbesserten Schmelzaustrieb zur Folge, was wiederum eine Überhitzung des Schnittspaltes aufgrund des Anstauens von Metallschmelze verhindert. Das so optimierte Austriebsvermögen der Schmelze kann daher direkt in eine Vorschubssteigerung umgewandelt werden. Die maximal erreichten Vorschübe unterscheiden sich hierbei kaum von den blechdickenabhängigen Vorschüben, die beim herkömmlichen Laserstrahlschneiden erreicht werden können. Auch lassen sich an den Schnittkanten auf beiden Seiten Kanten- und Oberflächenqualitäten erzeugen, die mit denjenigen beim senkrechten Laserstrahlschneiden konkurrenzfähig sind.

Die Variation des Schrägschneidwinkels ist hierbei insbesondere beim Schrägschneiden von Rohren erforderlich, da zur Erzeugung einer ebenen Schnittfläche bei einem 45°-Abschnitt an einem Rohr der Schrägschneidwinkel senkrecht zur Vorschubrichtung z.B. zwischen - 45° und 45° variiert werden muss. Bei rechtwinkliger Ausrichtung des Werkstücks (Schrägschneidwinkel 0°) liegt das Hochdruckgebiet auf dem Werkstück hierbei im Zentrum des Überschall-Schneidgasstroms, bei nicht rechtwinkliger Ausrichtung weist die Position des Hochdruckgebiets davon ab und variiert mit dem Schrägschneidwinkel, so dass die Position des Laserstrahls auf dem Werkstück nachgeführt werden muss, um sicherzustellen, dass der Laserstrahl während des Schrägschneidens im Hochdruckgebiet verbleibt.

Laut der Erfindung wird zum Einstellen der Position des Laserschneidstrahls während des Laserstrahlschneidens der Abstand zwischen der Schneidgasdüse und dem Werkstück bestimmt. Der Abstand zwischen Schneidgasdüse und Werkstück ändert sich in der Regel während des Schrägschneidprozesses mit der Veränderung des Schrägschneidwinkels. Da die Position des Hochdruckgebiets auf dem Werkstück auch vom Abstand zwischen Schneidgasdüse und Werkstück abhängt, ist es günstig, den Abstand während des Schrägschneidprozesses möglichst kontinuierlich zu erfassen und den erfassten Abstand zur Einstellung bzw. Anpassung der Position des Laserschneidstrahls zu nutzen.

Laut der Erfindung wird zum Bestimmen des Abstands die Kapazität zwischen Schneidgasdüse und Werkstück gemessen, wobei der Einfluss des Schrägschneidwinkels auf die Kapazität bei der Bestimmung des Abstands berücksichtigt wird. Die kapazitive Messung des Abstandes zwischen Werkstück und Schneidgasdüse ist prinzipiell bekannt und kann wie in der EP 0 873 813 B1 oder der EP 1 684 046 A1 der Anmelderin dargestellt erfolgen, welche bezüglich dieses Aspekts durch Bezugnahme zum Inhalt dieser Anmeldung gemacht werden. Bei der Veränderung des Schrägschneidwinkels verändert sich die Ausrichtung der Schneidgasdüse relativ zum Werkstück, was eine Veränderung der elektrischen Feldlinien zwischen Schneidgasdüse und Werkstück und damit einhergehend eine Veränderung der Kapazität auch bei gleichem Abstand zur Folge hat. Die Veränderung der Kapazität mit dem Schrägschneidwinkel muss daher für die Abstandsmessung berücksichtigt werden, um zu einem jeweiligen Schrägschneidwinkel einen jeweils korrekten Abstandswert zu erhalten.

Laut der Erfindung wird die Position des Laserschneidstrahls in Abhängigkeit vom Abstand a zwischen der Schneidgasdüse und der Werkstückoberfläche sowie dem Durchmesser d der Düsenöffnung bestimmt. Der Abstand e zwischen dem Zentrum des Überschall-Schneidgasstroms und einem parallel zum Überschall-Schneidgasstrom ausgerichteten Laserschneidstrahl, der in seiner idealen Schnittspaltposition in der Mitte des Hochdruckgebietes angeordnet ist, lässt sich in Abhängigkeit der drei Parameter $\alpha$, a und d wie folgt bestimmen:

$$e = \sin(\alpha)\,(a + (d/2)\sin(\alpha)),$$

wie weiter unten im Einzelnen dargestellt wird. Da der momentane Schrägschneidwinkel $\alpha$, der Düsendurchmesser d sowie der Abstand a (ggf. durch eine Abstandsmessung) der Maschinensteuerung bekannt sind, kann eine Laserbearbeitungsmaschine, an der das Verfahren durchgeführt wird, die Exzentrizität e selbst bestimmen und während des Laserstrahlschrägschneidens geeignet anpassen. Insbesondere können hierbei alle benötigten Größen im Maschinencode der numerischen Steuerung ("numerical control") bereits vorgegeben werden. Es versteht sich, dass unter dem Düsendurchmesser nicht notwendiger Weise der Durchmesser einer kreisförmigen Düsenöffnung verstanden wird, sondern dass ggf. auch Schneidgasdüsen mit anderen geometrischen Formen, z.B. mit elliptischer Form der Düsenöffnung eingesetzt werden können. In diesem Fall bezieht sich der Durchmesser der Düsenöffnung auf deren momentane (maximale) Ausdehnung senkrecht zur Vorschubrichtung.

In einer bevorzugten Variante werden der Laserschneidstrahl und die Düsenachse der Schneidgasdüse parallel ausgerichtet und die Position des Laserschneidstrahls auf der Werkstückoberfläche wird durch Verändern des Abstands zwischen dem Laserschneidstrahl und der Düsenachse eingestellt. Dies kann durch Verschieben des Linsenrohrs mit dem Laserstrahl relativ zur (ortsfesten) Schneidgasdüse, durch Verschieben der Schneidgasdüse beim ortsfestem Laserstrahl oder durch Überlagern dieser beiden Bewegungen erfolgen. In jedem Fall kann zur Bestimmung der Exzentrizität e die obige Formel verwendet werden, wobei diese ggf. noch durch das Hinzufügen von (konstanten) Korrekturfaktoren an die konkreten Prozessbedingungen angepasst werden kann.

Bei einer besonders vorteilhaften Variante werden der Laserschneidstrahl und die

Düsenachse der Schneidgasdüse nicht parallel ausgerichtet und bevorzugt wird die Position des Laserschneidstrahls auf der Werkstückoberfläche durch winkelschiefe Fokussierung des Laserschneidstrahls eingestellt. Die Erfinder haben erkannt, dass es nicht zwingend erforderlich ist, den Laserschneidstrahl parallel zur Düsenachse auszurichten bzw. diesen als Ganzes lateral zur Düsenöffnung zu verschieben, um einen Versatz auf der Werkstückoberfläche zu erzeugen. Vielmehr kann der für die vorliegende Anwendung erforderliche, verhältnismäßig geringe Strahlversatz z.B. auch dadurch erreicht werden, dass der Laserschneidstrahl winkelschief fokussiert wird, d.h. der Laserschneidstrahl trifft nicht wie sonst im Wesentlichen senkrecht auf ein fokussierendes Element, sondern seine optische Achse ist bezüglich des fokussierenden Elements geneigt, so dass der Laserschneidstrahl an dem fokussierenden Element umgelenkt wird und sich dadurch ebenfalls eine laterale Verschiebung bezüglich der Düsenachse ergibt.

In einer bevorzugten Weiterbildung wird zur winkelschiefen Fokussierung des Laserschneidstrahls ein fokussierendes Element und/oder ein im Strahlengang des Laserschneidstrahls vor dem fokussierenden Element angeordneter Umlenkspiegel verkippt. Eine relativ geringe Auslenkung des Umlenkspiegels bzw. des fokussierenden (Linsen-)Elements ist ausreichend, um eine vergleichsweise große Exzentrizität des Laserbearbeitungsstrahls auf dem Werkstück zu erreichen. Insbesondere bei der Verkippung des Umlenkspiegels ist die Verstelleinrichtung hinreichend weit vom eigentlichen Prozess entfernt, so dass dieser störungsunempfindlicher wird.

In einer besonders vorteilhaften Variante wird der Laserschneidstrahl in einem Abstand von mehr als 50 %, bevorzugt von mehr als 70 % der Dicke des Werkstücks unterhalb der Werkstückoberseite fokussiert. Die Erfinder haben herausgefunden, dass im Gegensatz zu herkömmlichen Laserschneidprozessen, bei denen der Fokus auf der Werkstückoberfläche oder im oberen Drittel bzw. der oberen Hälfte des Werkstücks fokussiert wird, um einen trichterförmigen Schnittspalt zu erhalten, bei der vorliegenden Anwendung eine Fokussierung in der unteren Hälfte des Werkstücks, ggf. sogar noch unterhalb der Werkstückunterseite günstig ist, um eine hohe Qualität des Laserschneidprozesses zu gewährleisten.

Als Schneidgas kann ein inertes Gas, insbesondere Stickstoff gewählt werden. Der Überschall-Schneidgasstrom wird in der Regel mit inerten Gasen durchgeführt, d.h. ein zusätzlicher Energieeintrag durch reaktive Gase wie z.B. Sauerstoff findet nicht statt. Das Schneidgas steht hierbei unter einem hohen Druck von mehr als 10 bar, typischer Weise ca. 15 bar, ggf. auch von 20 bar oder mehr.

Die Erfindung ist auch verwirklicht in einer Laserbearbeitungsmaschine der eingangs genannten Art, welche zusätzlich aufweist: eine Einstelleinrichtung zum Einstellen der Position des Laserschneidstrahls auf der Werkstückoberfläche relativ zum Überschall-Schneidgasstrom, sowie eine Steuerungseinrichtung, die ausgelegt ist, die Position des Laserschneidstrahls auf der Werkstückoberfläche so einzustellen, dass der Laserschneidstrahl bei der Relativbewegung in einem innerhalb des Überschall-Schneidgasstroms gebildeten Hochdruckgebiet verbleibt. Die Laserberarbeitungsmaschine kann insbesondere zum Laserstrahlschneiden von rohrförmigen Werkstücken ausgelegt sein. Es versteht sich aber, dass ggf. auch ein Schrägschneiden an anderen, insbesondere plattenförmigen Werkstücken erfolgen kann, bei denen der Schrägschneidwinkel ggf. während des Laserstrahlschrägschneidens konstant bleibt.

Laut der Erfindung weist die Laserbearbeitungsmaschine eine Abstandsmesseinrichtung zur Abstandsmessung zwischen der Schneidgasdüse und dem Werkstück auf. Die Abstandsmessung kann z.B. optisch oder mechanisch erfolgen. Mit Hilfe der Abstandsmesseinrichtung kann der Abstand so eingestellt werden, dass er einerseits groß genug ist, um das Berühren der Schneidgasdüse an dem Werkstück bzw. an von diesem abstehenden Teilen zu verhindern, und andererseits klein genug, um eine gute Einkopplung des Schneidgasstrahls in das Werkstück zu ermöglichen.

Laut der Erfindung ist die Abstandsmesseinrichtung ausgelegt, die Kapazität zwischen der Schneidgasdüse und dem Werkstück zu messen und unter Berücksichtigung des Einflusses des Schrägschneidwinkels auf die Kapazität den Abstand zwischen Schneidgasdüse und Werkstückoberfläche zu bestimmen. Zu diesem Zweck können Kennlinien in der Abstandsmesseinrichtung hinterlegt werden, welche den Zusammenhang zwischen Kapazität und Abstand bei einem jeweiligen Schrägschneidwinkel (z.B. bei 0°, 15°, 30°, 45° etc.) definieren. Die Kennlinien können hierbei durch Kalibrations-Messungen erhalten werden, bei denen der (bekannte) Abstand zwischen Schneidgasdüse und Werkstückoberfläche bei festem Schrägschneidwinkel variiert wird.

Laut der Erfindung ist die Steuerungseinrichtung ausgelegt, die an den Schrägschneidwinkel angepasste Position des Laserschneidstrahls in Abhängigkeit vom Abstand zwischen der Schneidgasdüse und der Werkstückoberfläche sowie dem Durchmesser der Düsenöffnung zu bestimmen. Dies kann auf besonders einfache Weise durch die oben angegebene Formel erfolgen.

In einer weiteren vorteilhaften Ausführungsform umfasst die Einstelleinrichtung eine Verschiebeeinrichtung zur Einstellung der Position des Laserschneidstrahls auf der Werkstückoberfläche durch Verändern des Abstands zwischen der Düsenachse der Schneidgasdüse und dem parallel zur Düsenachse ausgerichteten Laserschneidstrahl. Als Verschiebeeinrichtung können z.B. Linearmotoren dienen, welche am Laserbearbeitungskopf angebracht sind und die Bewegung der Schneidgasdüse relativ zum Laserbearbeitungskopf entlang einer typischer Weise senkrecht zur Düsenachse ausgerichteten Raumrichtung ermöglichen. Alternativ oder zusätzlich kann auch das Linsenrohr bzw. können optische Elemente, z.B. Umlenkspiegel, in der Strahlführung verschoben oder verkippt werden, um die Position des Laserschneidstrahls in der Düsenöffnung zu verändern und auf diese Weise einen Lateralversatz zwischen Düsenachse und Laserschneidstrahl zu erreichen.

In einer weiteren vorteilhaften Ausführungsform umfasst die Einstelleinrichtung eine Verkippungseinrichtung zum Verkippen eines fokussierenden Elements und/oder eines im Strahlengang des Laserschneidstrahls vor dem fokussierenden Element angeordneten Umlenkspiegels, um die Position des Laserschneidstrahls auf der Werkstückoberfläche durch winkelschiefe Fokussierung einzustellen. Durch winkelschiefe Fokussierung kann ebenfalls der Strahlversatz bzw. die Exzentrizität des Laserschneidstrahls relativ zum Überschall-Schneidgasstrom auf der Werkstückoberfläche eingestellt werden, wobei in diesem Fall die Düsenachse der Schneidgasdüse und die Strahlachse des Laserschneidstrahls nicht parallel zueinander verlaufen.

Es versteht sich, dass neben den oben aufgezeigten Möglichkeiten zur Erzeugung eines lateralen Versatzes zwischen Laserschneidstrahl und Überschall-Schneidgasstrom noch weitere Möglichkeiten bestehen, z.B. kann der Laserschneidstrahl exzentrisch durch eine insbesondere nicht radialsymmetrische Düsenöffnung hindurch treten und durch Drehen des Düsenkörpers ebenfalls ein lateraler Versatz zwischen dem Laserbearbeitungsstrahl und dem Überschall-Schneidgasstrom erzeugt werden.

Die Erfindung ist weiterhin verwirklicht in einem Computerprogrammprodukt, welches Codemittel zum Erstellen eines Bearbeitungsprogramms aufweist, das zum Durchführen aller Schritte des oben beschriebenen Verfahrens angepasst ist, wenn das Bearbeitungsprogramm auf der Steuerungseinrichtung der Laserbearbeitungsmaschine abläuft. Das Computerprogrammprodukt kann z.B. eine Diskette oder ein anderer Datenträger sein, auf dem ein Programmcode als Codemittel gespeichert ist, der geeignet ist, das Bearbeitungsprogramm anhand von durch einen Benutzer über eine geeignete Bedienoberfläche vorgebbaren Angaben über den gewünschten Schrägschneidprozess (Art des Werkstücks, Art der Kontur, etc.) zu erstellen. Das Bearbeitungsprogramm kann schon lange vor dem Bearbeiten des Werkstückes erstellt werden und erst unmittelbar vor dem Bearbeiten mittels eines computerlesbaren Mediums oder mittels einer anderen Form der Datenübertragung an die Steuerungseinrichtung übermittelt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1a,b  eine schematische Darstellung eines rohrförmigen Werkstücks mit einem 45°-Abschnitt mit ebener Schnittfläche (a) und einen erfindungsgemäßen Laserstrahlschrägschneidprozess zur Erzeugung eines solchen Abschnitts mittels eines exzentrisch zu einem Überschall-Schneidgasstrom ausgerichteten Laserschneidstrahl,

Fig. 2a-c  schematische Darstellungen der elektrischen Feldstärke zwischen einem Werkstück und einer Schneidgasdüse bei einem Schrägschneidwinkel von 0°, 30° bzw. 45°,

Fig. 3a,b  schematische Darstellungen von Teilbereichen einer erfindungsgemäßen Laserbearbeitungsmaschine zur Bearbeitung von rohrförmigen bzw. von plattenförmigen Werkstücken, und

Fig.4a,b  schematische Darstellungen der winkelschiefen Fokussierung des Laserschneidstrahls (a) sowie einer drehbaren Schneidgasdüse mit elliptischem Querschnitt (b) jeweils zur Erzeugung eines lateralen Versatzes zwischen Laserschneidstrahl und Überschall-Schneidgasstrom.

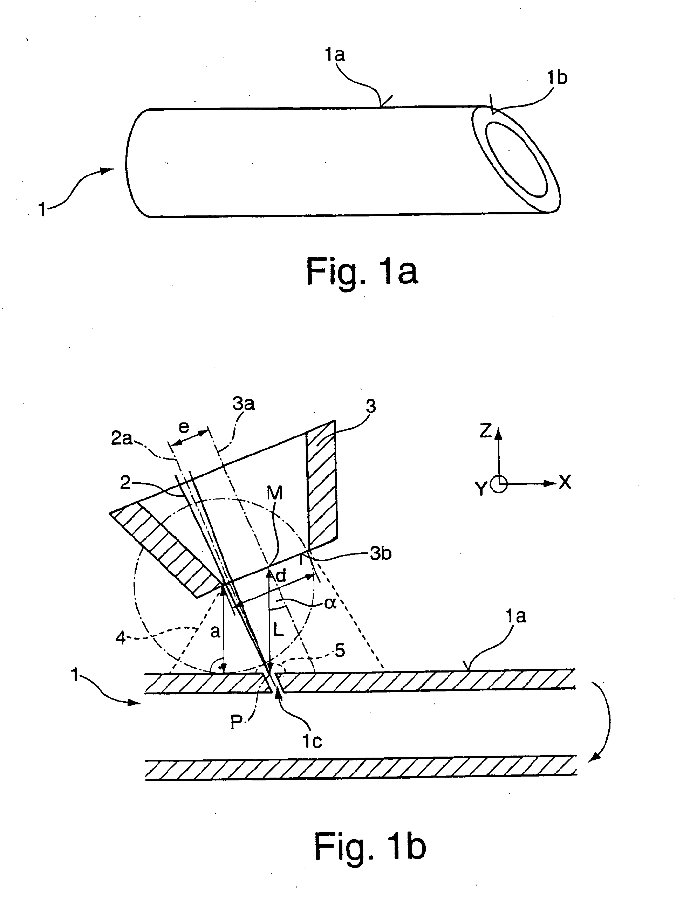

**Fig. 1a** zeigt ein rohrförmiges Werkstück **1**, an dem ein 45°-Abschnitt mit einer ebenen Schnittfläche **1b** gebildet ist, welche mit einem weiteren (nicht gezeigten) rohrförmigen Werkstück mit ebener Schnittfläche unter Bildung eines 90°-Winkels entlang einer die Schnittflächen verbindenden dünnen Schweißnaht verschweißt werden kann. Um die ebene Schnittfläche 1 b zu erzeugen, ist es erforderlich, an dem rohrförmigen Werkstück 1 einen Schrägschneidprozess durchzuführen, bei dem der Schrägschneidwinkel α (vgl. **Fig. 1b**) im Bereich zwischen -45° und 45° variiert wird, da bei einem herkömmlichen Schneidprozess mit konstantem Schrägschneidwinkel α eine verwundene Schnittfläche an dem Werkstück 1 entstehen würde.

Fig. 1b zeigt eine Momentaufnahme eines solchen Laserstrahl-Schrägschneidprozesses an dem rohrförmigen Werkstück 1 bei einem Schrägschneidwinkel α von ca.-20°, bei dem ein Laserschneidstrahl **2** mit seiner Strahlachse **2a** bezüglich der Flächennormalen auf die Werkstückoberfläche **1a** ausgerichtet ist. Parallel zum Laserschneidstrahl 2 ist die Düsenachse **3a** einer Schneidgasdüse **3** ausgerichtet, aus der ein Überschall-Schneidgasstrom **4** austritt und auf die Werkstückoberfläche 1 a gerichtet wird. Der Überschall-Schneidgasstrom 4 bildet hierbei einen Hochdruckbereich **5** an der Werkstückoberfläche 1a aus, der zur Düsenachse 3a der Schneidgasdüse 3 versetzt ist und dessen Lage bezüglich der Düsenachse 3a neben dem Schrägschneidwinkel α auch vom Durchmesser **d** der Schneidgasdüse 3 und dem Abstand **a** zwischen dem Rand der Düsenöffnung **3b** der Schneidgasdüse 3 und der Werkstückoberfläche 1a abhängt.

Um den Laserschneidstrahl 2 im Hochdruckbereich 5 auf der Werkstückoberfläche 1a zu positionieren, wird die Strahlachse 2a des Laserschneidstrahls 2 und damit auch die Schnittfuge **1c** bei dem Laserstrahlschrägschneidprozess um einen Abstand (Exzentriziät) **e** zur Düsenachse 3a versetzt. Zur Bestimmung der Exzentrizität e in Abhängigkeit von den Parametern α, d und a wird im Folgenden ein einfaches geometrisches Modell verwendet, welches auf dem Impulserhaltungssatz basiert: Der höchste Druck und damit die Mitte des Hochdruckgebiets 5 befinden sich dort, wo die Atome des Überschall-Schneidgasstroms 4 im Wesentlichen senkrecht auf die Werkstückoberfläche 1a auftreffen. Geht man davon aus, dass die Gasmoleküle annähernd konzentrisch aus der Düsenöffnung 3b austreten, so ist diese Position **P** festgelegt durch denjenigen Punkt auf der Werkstückoberfläche 1 a, welcher direkt unterhalb des Mittelpunkts **M** der Düsenöffnung 3b und um eine Länge **L** von diesem beabstandet auf der Werkstückoberfläche 1 a liegt.

Wie aus Fig. 1b unmittelbar zu ersehen ist, gilt:

$e = L \sin(\alpha)$. Wie aus Fig. 1 b ebenfalls direkt abgelesen werden kann, gilt für die Länge $L = a + d / 2 \sin(\alpha)$. Somit ergibt sich insgesamt für die Exzentrizität zwischen Strahlachse 2a des Laserschneidstrahls 2 und der Düsenachse 3a der Laserbearbeitungsdüse 3 der folgende Zusammenhang:

$$e = \sin(\alpha)\,(a + (d / 2)\sin(\alpha)).$$

Aus obiger Formel kann bei gegebenem, während des gesamten Schrägschneidens konstantem Düsendurchmesser d sowie dem vorgebbaren, variablen Abstand a zwischen Schneidgasdüse 3 und Werkstückoberfläche 1a und dem Schrägschneidwinkel α die Exzentrizität e bestimmt werden, die eingestellt werden muss, damit der Laserschneidstrahl 2 im Hochdruckgebiet 5 verbleibt, wenn das rohrförmige Werkstück 1 unter Variation des Schrägschneidwinkels α entlang einer Vorschubrichtung Y eines XYZ-Koordinatensystems gedreht wird, wie in Fig. 1b durch einen Pfeil angedeutet ist. Ein solcher Vorschub ist notwendig, damit an dem rohrförmigen Werkstück 1 der in Fig. 1a gezeigte, 45°-Abschnitt erzeugt werden kann. Bei der Variation des Schrägschneidwinkels α in X-Richtung, d.h. rechtwinklig zur Vorschubrichtung Y in einem Bereich zwischen - 45° und 45° muss die Position P des Laserschneidstrahls 2 entsprechend nachgeführt werden, damit der Laserschneidstrahl 2 im Hochdruckbereich 5 verbleibt.

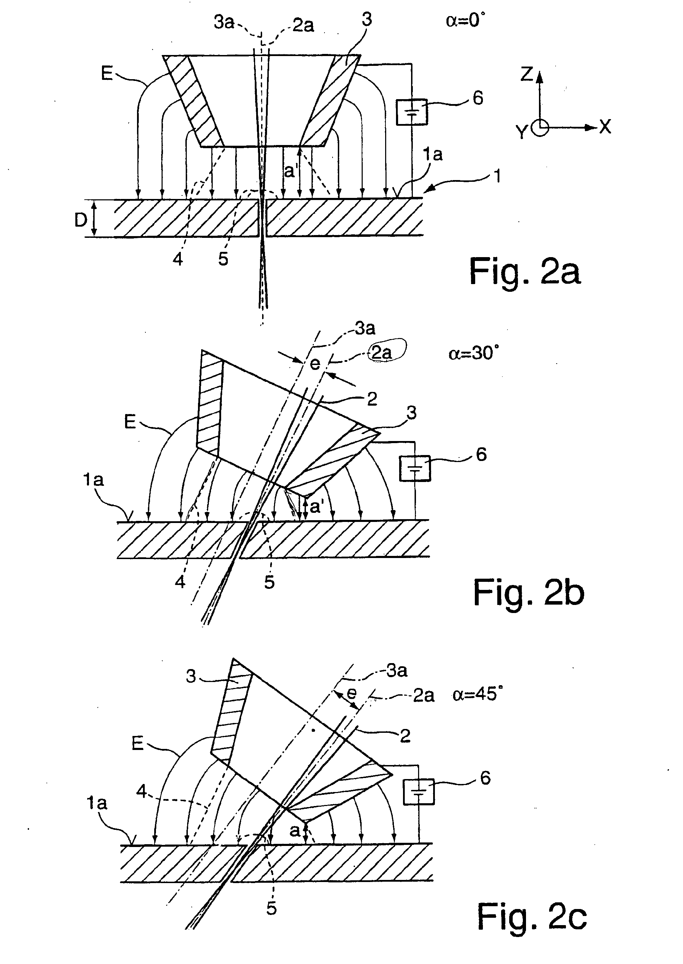

Hierzu ist es günstig, den Abstand a zwischen der Scheidgasdüse 3 und dem Werkstück 1 während des Schrägschneidprozesses zu überwachen und ggf. zu regeln. Zu diesem Zweck kann wie in **Fign. 2a-c** gezeigt eine kapazitive Abstandsmesseinrichtung 6 vorgesehen sein, welche wie in der eingangs zitierten EP 1 684 046 A1 oder der EP 0 873 813 B1 ausgebildet sein kann, und deren Funktionsweise hier nicht im Einzelnen beschrieben wird. Die Abstandsmesseinrichtung 6 erzeugt eine Potentialdifferenz zwischen dem metallischen Düsenkörper der Schneidgasdüse 3 und dem ebenfalls metallischen Werkstück 1, so dass sich zwischen beiden ein elektrisches Feld E ausbildet, dessen Feldlinien in Fign. 2a-c für Schrägschneidwinkel α von 0°, 30° und 45° gezeigt sind. In Abhängigkeit von der Kapazität, die zwischen der Schneidgasdüse 3 und dem metallischen Werkstück 1 gemessen wird, verändert sich die Lage der Feldlinien E und somit die Kapazität zwischen Werkstück 1 und Schneidgasdüse 3. Um den Zusammenhang zwischen Kapazität und Abstand a bei gegebenem Schrägschneidwinkel α zu ermitteln, kann z.B. bei den drei in Fign. 2a-c gezeigten Schrägschneidwinkeln α jeweils eine Kapazitätsmessung bei variablem, bekanntem Abstand vorgenommen werden, um Kennlinien für den Abstand in Abhängigkeit von der Kapazität bei konstantem Schrägschneidwinkel zu erhalten. Für die Abstandsmessung bei Schrägschneidwinkeln α, für die keine solche Kennlinie bestimmt wurde, kann zwischen den bekannten Kennlinien interpoliert werden. Der kapazitiv gemessene Abstand **a'** wird hierbei zwischen der Außenkante der Schneidgasdüse 3 und dem Werkstück 1 bestimmt, wohingegen der in Fig. 1b gezeigte Abstand a zwischen der Kante der Düsenöffnung 3b und dem Werkstück 1 definiert ist. Es versteht sich, dass bei bekannter Düsengeometrie der Schneidgasdüse 3 in der Abstandsmesseinrichtung 6 eine Umrechnung des kapazitiv gemessenen Abstands a' in den Abstand a zwischen der Kante der Düsenöffnung 3a und dem Werkstück 1 erfolgen kann, um letzteren in die oben angegebene Formel einzusetzen.

Wie in Fign. 2a-c ebenfalls zu erkennen ist, wird die Strahlachse 2a des Laserschneidstrahls 2 bei den unterschiedlichen Schrägschneidwinkeln α in unterschiedlichem Abstand e zur Düsenachse 3a ausgerichtet, um den Schneidgasstrahl 2 im Hochdruckgebiet 5 zu halten. Weiterhin wird der Laserschneidstrahl 2 nicht auf der Werkstückoberfläche 1a fokussiert, sondern darunter, und zwar in einem Abstand von mehr als 50% der Dicke d des Werkstücks 1 von dessen Werkstückoberseite 1a. Durch eine solche Fokussierung kann die Qualität der Schnittkanten beim Schrägschneiden zusätzlich gesteigert werden. Die Fokussierung kann hierbei auch in einem Abstand von mehr als 70 % der Dicke des Werkstücks 1 von der Werkstückoberseite 1a erfolgen; abhängig von den Prozessbedingungen kann der Laserschneidstrahl 2 auch unterhalb der Unterseite des Werkstücks 1 fokussiert werden.

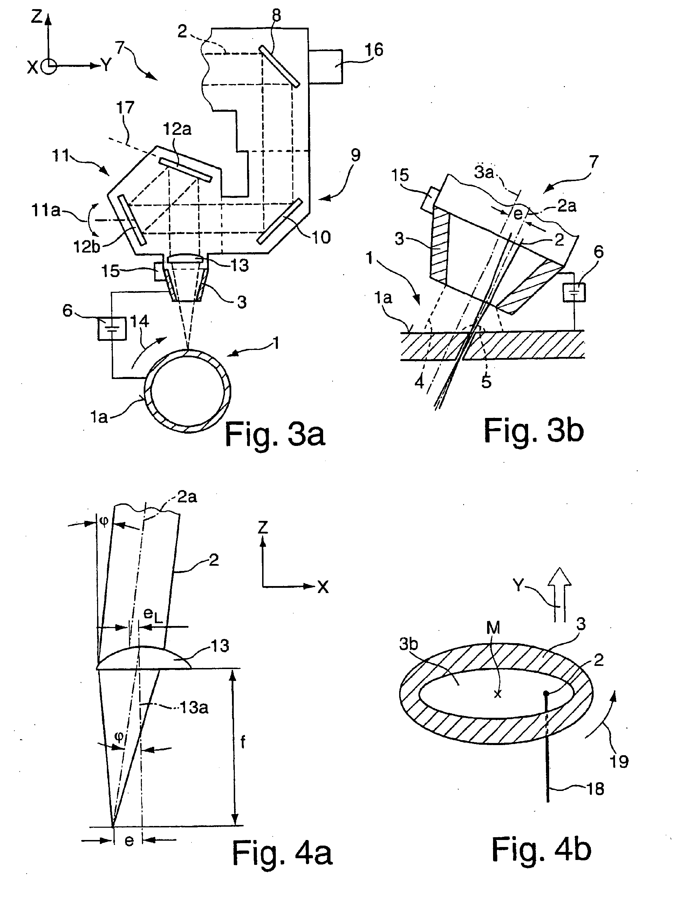

**Fig. 3a** zeigt einen Ausschnitt einer Laserbearbeitungsmaschine **7**, welche zur Durchführung des oben beschriebenen Verfahrens an dem rohrförmigen Werkstück 1 ausgelegt ist. In der Laserbearbeitungsmaschine 7 wird der Laserschneidstrahl 2 mittels einer nicht näher beschriebenen Strahlführung auf einen adaptiven Umlenkspiegel **8** gelenkt und tritt nachfolgend in einen Laserbearbeitungskopf **9** ein, in dem ein weiterer Umlenkspiegel **10** angeordnet ist, von dem der Laserschneidstrahl 2 in einen Gehäuseteil **11** des Laserbearbeitungskopfs umgelenkt wird, der mittels einer Dreheinrichtung **11a** (vgl. Doppelpfeil) um eine Achse parallel zur Y-Richtung drehbar ist, um unterschiedliche Schrägschneidwinkel α an dem Werkstück 1 einstellen zu können. In dem drehbaren Gehäuseteil 11 befinden sich ein erster und zweiter Umlenkspiegel **12a, 12b** sowie eine Fokussierlinse **13** zur Fokussierung des Laserschneidstrahls 2 auf dem Werkstück 1 bzw. wie oben beschrieben unterhalb der Werkstückoberfläche 1a. Die Fokuslage des Laserstrahls 2 kann hierbei durch den adaptiven Umlenkspiegel 8 in gewissen Grenzen verändert werden, indem dessen Form z.B. mit Hilfe von Piezo-Elementen oder durch Druckbeaufschlagung mit einem Fluid an seiner Rückseite geeignet verändert wird. Als Bewegungseinrichtung zur Bewegung des Werkstücks 1 in der ZY-Ebene weist die Laserbearbeitungsmaschine 7 ein Spannfutter **14** (vgl. Pfeil) auf, welches zur Erzeugung einer Drehbewegung des Werkstücks 1 dient, wobei mittels des Spannfutters 14 gleichzeitig auch eine Bewegung des Werkstücks 1 in X-Richtung erfolgen kann, um den in Fig. 1a gezeigten 45°-Abschnitt zu erzeugen. Es versteht sich, dass ggf. auch der Laserbearbeitungskopf 9 mittels konventioneller Verschiebeeinheiten in X-Richtung verschiebbar sein kann, um den in Fig. 1a gezeigten 45°-Abschnitt an dem Werkstück 1 zu erzeugen.

Zur Erzeugung der Exzentrizität des Laserschneidstrahls 2 relativ zur an dem Laserbearbeitungskopf 9 befestigten Schneidgasdüse 3 kann diese mittels einer als Einstelleinrichtung dienenden Verschiebeeinrichtung **15** in Form eines konventionellen Linearantriebs in X-Richtung bewegt werden. Eine Steuerungseinrichtung **16** dient hierbei der Steuerung der Verschiebeeinrichtung 15 auf eine solche Weise, dass der Laserschneidgasstrahl 2 in der X-Richtung im gewünschten Abstand zum (in Fig. 3 nicht gezeigten) Überschall-Schneidgasstrahl 4 ausgerichtet ist. Die oben angegebene Formel für die Exzentrizität e kann hierbei in der Maschinensteuerung der Laserbearbeitungsmaschine 1 hinterlegt werden, so dass die Steuerungseinrichtung 16 die optimale Exzentrizität selbst berechnen kann.

Es versteht sich weiterhin, dass die Laserbearbeitungsmaschine 7 von Fig. 3a auch zum Schrägschneiden eines plattenförmigen Werkstücks 1 ausgelegt sein kann, wie in **Fig. 3b** dargestellt ist, bei der die Vorschubrichtung in X-Richtung verläuft. Auch in diesem Fall kann die Exzentrizität e zwischen Laserstrahlachse 2 und Düsenachse 3a auf die oben beschriebene oder auf andere Weise eingestellt werden. Insbesondere beim in Fig. 3b gezeigten Schneiden von plattenförmigen Werkstücken muss der Schrägschneidwinkel nicht zwingend während des Laserstrahlschneidens variiert werden. Vielmehr kann der Schrägschneidwinkel auch einen konstanten Wert annehmen, so dass eine plane, schräge Schnittkante an dem Werkstück 1 gebildet wird. Bei der Verbindung zweier solcher plattenförmiger Werkstücke unter einem Winkel von z.B. 90° entlang zweier schräger Schnittkanten liegen diese flächig aneinander an, so dass die zwei plattenförmigen Werkstücke leichter miteinander verschweißt werden können. Es versteht sich, dass auch an plattenförmigen Werkstücken kompliziertere geometrische Formen geschnitten werden können, die eine Veränderung des Schrägschneidwinkels während des Laserstrahlschneidens erfordern.

Es versteht sich weiterhin, dass zur Erzeugung eines Versatzes zwischen der Strahlachse 2a des Laserschneidstrahls 2 und dem Überschall-Schneidgasstrom 4 bzw. der Düsenachse 3a verschiedene Möglichkeiten bestehen, z.B. kann auch durch Verschieben oder Verkippen eines optischen Elements, z.B. der Umlenkspiegel 12a, 12b die gewünschte Exzentrizität e erzeugt werden. Da bei dem Schrägschneidprozess die Laserstrahlachse 2a nicht zwingend parallel zur Düsenachse 3a ausgerichtet sein muss, ist es auch möglich, die Exzentrizität e auf der Werkstückoberfläche 1a durch winkelschiefes Fokussieren an der Fokussierlinse 13 zu erzeugen, wie im Folgenden anhand von **Fig. 4a** dargestellt wird.

Zur winkelschiefen Fokussierung kann der erste Umlenkspiegel 12a mittels einer in Fig. 3 angedeuteten, konventionellen Verkippungseinrichtung **17** z.B. in Form eines Piezoaktors verkippt werden, so dass der Laserschneidstrahl 2 nicht senkrecht, sondern unter einem Winkel φ bezüglich der Z-Richtung auf die Fokussierlinse 13 auftrifft und zusätzlich mit seiner Laserstrahlachse 2a bezüglich der optischen Achse **13a** der Fokussierlinse 13 um einen Abstand $e_L$ in X-Richtung versetzt auftrifft. Der zur Erzeugung einer gewünschten Exzentrizität e auf dem Werkstück 1 erforderliche Kippwinkel φ lässt sich hierbei aus dem Abstand zwischen dem Umlenkspiegel 12a und der Fokussierlinse 13 sowie der Fokuslänge f durch einfache geometrische Überlegungen bestimmen. Es versteht sich, dass alternativ zum oben beschriebenen Vorgehen auch die Fokussierlinse 13 verkippt werden kann, um den gewünschten lateralen Versatz zwischen Laserschneidstrahl 2 und Düsenachse 3a zu erhalten. Es versteht sich weiterhin, dass zur winkelschiefen Fokussierung nicht zwingend die Erzeugung eines Abstands $e_L$ zwischen der optischen Achse 13a der Fokussierlinse 13 und der Laserstrahlachse 2a erforderlich ist, sondern dass die Laserstrahlachse 2a idealer Weise die Fokussierlinse 13 zentrisch an deren optischen Achse 13a schneidet.

Eine weitere Möglichkeit zur Erzeugung eines lateralen Versatzes zwischen Laserschneidstrahl 2 und Überschall-Schneidgasstrom ist in **Fig. 4b** anhand einer Schneidgasdüse 3 mit ellipsenförmiger Düsenöffnung 3b gezeigt. Der Laserschneid strahl 2, hinter dem sich entlang der Vorschubrichtung Y ein Schnittspalt **18** ausbildet, ist hierbei nicht im Zentrum M der Düsenöffnung 3b angeordnet, sondern zu dieser lateral versetzt. Die Schneidgasdüse 3 kann hierbei mittels einer durch einen Pfeil angedeuteten Dreheinrichtung **19** um die Laserstrahlachse des Laserschneidstrahls 2 gedreht werden, wodurch sich die Lage des Zentrums M der Düsenöffnung 3b in X-Richtung verändert und sich ebenfalls ein lateraler Versatz zwischen Laserschneidstrahl 2 und dem Zentrum M der Düsenöffnung 3b bzw. dem Überschall-Schneidgasstrom ergibt. Es versteht sich, dass zur Verbesserung des Schneidergebnisses zusätzlich ein Vorlauf des Laserschneidstrahls 2 (in Y-Richtung) in der Schneidgasdüse möglich ist, ohne dass hierbei gleichzeitig die Exzentriziät durch Drehen der Schneidgasdüse einstellbar sein muss.

Um geeignete Prozessbedingungen für den Schrägschneidprozess zu erhalten, wird als Schneidgas ein inertes Gas, z.B. Stickstoff, verwendet, das sich unter einem hohen Schneidgasdruck von typischer Weise mehr als 10 bar in einem (nicht gezeigten) Druckraum des Laserschneidkopfs 9 befindet, der sich an die Schneidgasdüse 3 anschließt. Ferner sollte der Abstand zwischen der Schneidgasdüse 3 und der Werkstückoberfläche 1a möglichst gering gewählt werden, um optimale Schneidergebnisse zu erhalten. Weiterhin ist es für das Schrägschneiden bei großen Schrägschneidwinkeln von z.B: 45° günstig, wenn der (Innen-)Durchmesser der Schneidgasdüse 3 groß gewählt wird, z.B. 2 mm oder mehr, wobei wie in Fig. 4b gezeigt nicht zwingend ein runder Düsenquerschnitt gewählt werden muss.

Der oben beschriebene Prozess zum Laserstrahlschrägschneiden ist vom bearbeiteten Material sowie von dessen Dicke weitgehend unabhängig und kann insbesondere zum Schneiden von Edelstahl, Baustahl oder Aluminium eingesetzt werden. Es versteht sich, dass der Schrägschneidprozess nicht auf das Trennschneiden von rohrartigen Werkstücken beschränkt ist, vielmehr können auf die oben beschriebene Weise mittels des Laserschneidstrahls beliebige Konturen z.B. auch an plattenförmigen Werkstücken geschnitten werden. In jedem Fall können sowohl eine hohe Qualität der beim Trennschnitt erzeugten Schnittkanten als auch Vorschubgeschwindigkeiten erreicht werden, die denen beim senkrechten Laserstrahlschneiden bezogen auf die effektive Schnitttiefe vergleichbar sind.

**Patentansprüche**

1. Verfahren zum Laserstrahlschrägschneiden eines Werkstücks (1), bei dem ein aus einer Schneidgasdüse (3) austretender Schneidgasstrom (4) unter einem Schrägschneidwinkel (α) zur Werkstückoberfläche (1a) ausgerichtet wird, und bei dem das Werkstück (1) und der Laserschneidstrahl (2) beim Laserstrahlschrägschneiden relativ zueinander bewegt werden, wobei der Schrägschneidwinkel (α) rechtwinklig zu einer Vorschubrichtung (Y) verläuft, **dadurch gekennzeichnet, dass** der Schneidgasstrom ein Überschall - Schneidgasstrom ist, und dass während der Relativbewegung der Versatz (e) des Laserschneidstrahls (2) zur Düsenachse (3a) auf der Werkstückoberfläche (1a) und damit die Position (P) des Laserschneidstrahls (2) auf der Werkstückoberfläche (1a) in Abhängigkeit vom Schrägschneidwinkel (a), vom Abstand (a) zwischen der Schneidgasdüse (3) und der Werkstückoberfläche (1a) sowie vom Durchmesser (d) der Düsenöffnung (3b) eingestellt wird, so dass der Laserschneidstrahl (2) in einem innerhalb des Überschall-Schneidgasstroms (4) gebildeten Hochdruckbereich (5) auf die Werkstückoberfläche (1a) auftrifft, in dem der Überschall-Schneidgasstrom (4) im Wesentlichen senkrecht auf die Werkstückoberfläche (1a) auftrifft, wobei zum Einstellen der Position (P) des Laserschneidstrahls (2) der Abstand (a) zwischen der Schneidgasdüse (3) und dem Werkstück (1) während des Laserstrahlschrägschneidens bestimmt wird und zum Bestimmen des Abstands (a) die Kapazität zwischen der Schneidgasdüse (3) und dem Werkstück (1) gemessen wird, wobei der Einfluss des Schrägschneidwinkels (α) auf die Kapazität bei der Bestimmung des Abstands (a) berücksichtigt wird.

**2.** Verfahren nach Anspruch 1, bei dem der Laserschneidstrahl (2) und die Düsenachse (3a) der Schneidgasdüse (3) parallel ausgerichtet werden und die Position des Laserschneidstrahls (2) auf der Werkstückoberfläche (1 a) durch Verändern des Versatzes (e) des Laserschneidstrahls (2) zur Düsenachse (3a) eingestellt wird.

**3.** Verfahren nach einem der vorhergehenden Ansprüche, bei dem dar Laser-schneidstrahl (2) und die Düsenachse (3a) der Schneidgasdüse (3) nicht parallel ausgerichtet werden und bevorzugt die Position (P) des Laserschneidstrahls (2) auf der Werkstückoberfläche (1a) durch winkelschiefe Fokussierung des Laserschneidstrahls (2) eingestellt wird.

**4.** Verfahren nach Anspruch 3, bei dem zur winkelschiefen Fokussierung des Laserschneidstrahls (2) ein fokussierendes Element (13) und/oder ein im Strahlengang des Laserschneidstrahls (2) vor dem fokussierenden Element (13) angeordneter Umlenkspiegel (12a) verkippt wird.

**5.** Verfahren nach einem der vorhergehenden Ansprüche, bei dem der Laserschneidstrahls (2) in einem Abstand von mehr als 50 %, bevorzugt von mehr als 70 % der Dicke (D) des Werkstücks (1) unterhalb der Werkstückoberseite (1a) fokussiert wird.

**6.** Laserbearbeitungsmaschine (7) zum Laserstrahlschrägschneiden eines Werkstücks (1), umfassend:

eine unter einem Schrägschneidwinkel (α) relativ zur einer Werkstückoberfläche (1a) ausrichtbare Schneidgasdüse (3) zur Erzeugung eines Schneidgasstroms (4),
eine Bewegungseinrichtung (11a, 14) zur Bewegung des Werkstücks (1) und des Laserschneidstrahls (2) relativ zueinander unter dem rechtwinklig zu einer Vorschubrichtung (Y) verlaufenden Schrägschneidwinkel (α),
einen Laserbearbeitungskopf (9) zum Positionieren eines Laserschneidstrahls (2) an einer Position (P) auf der Werkstückoberfläche (1a).
**gekennzeichnet durch** die Schneidgasdüse, die zur Erzeugung eines Überschall-Schneidgasstroms geeignet ist,
eine Einstelleinrichtung (15, 17, 19) zur Einstellung des Versatzes (e) des Laserschneidstrahls (2) zur Düsenachse (3a) auf der Werkstückoberfläche (1a) und damit der Position (P) des Laserschneidstrahls (2) auf der Werkstückoberfläche (1a) relativ zum Überschall-Schneidgasstrom (4), und
einer Steuerungseinrichtung (16), die ausgelegt ist, den Versatz (e) des Laserschneidstrahls (2) zur Düsenachse (3a) auf der Werkstückoberfläche (1a) und damit die Position (P) des Laserschneidstrahls (2) auf der Werkstückoberfläche (1a) in Abhängigkeit vom Schrägschneidwinkel (α), vom Abstand (a) zwischen der Schneidgasdüse (3) und der Werkstückoberfläche (1 a) sowie vom Durchmesser (d) der Düsenöffnung (3b) einzustellen, so dass der Laserschneidstrahl (2) bei der Relativbewegung in einem innerhalb des Überschall-Schneidgasstroms (4) gebildeten Hochdruckgebiet (5) verbleibt, in dem der Überschall-Schneidgasstrom (4) im Wesentlichen senkrecht auf die Werkstückoberfläche (1a) auftrifft, weiter umfassend: eine Abstandsmesseinrichtung (6) zur Abstandsmessung zwischen der Schneidgasdüse (3) und dem Werkstück (1), welche ausgelegt ist, die Kapazität zwischen der Schneidgasdüse (3) und dem Werkstück (1) zu messen und unter Berücksichtigung des Einflusses des Schrägschneidwinkels (α) auf die Kapazität den Abstand (a) zu bestimmen.

**7.** Laserbearbeitungsmaschine nach Anspruch 6, bei der die Einstelleinrichtung (15, 17, 19) eine Verschiebeeinrichtung (15) zur Einstellung der Position (P) des Laserschneidstrahls (2) auf der Werkstückoberfläche (1a) durch Verändern des Abstands (e) zwischen der Düsenachse (3a) der Schneidgasdüse (3) und dem parallel zur Düsenachse (3a) ausgerichteten Laserschneidstrahl (2) aufweist.

**8.** Laserbearbeitungsmaschine nach einem der Ansprüche 6 oder 7, bei der die Einstelleinrichtung (15, 17, 19) eine Verkippungseinrichtung (17) zum Verkippen eines fokussierenden Elements (13) und/oder eines im Strahlengang des Laserschneidstrahls (2) vor dem fokussierenden Element (13) angeordneten Umlenkspiegels (12a) aufweist, um die Position (P) des Laserschneidstrahls (2) auf der Werkstückoberfläche (1a) durch winkelschiefe Fokussierung einzustellen.

**9.** Computerprogrammprodukt, welches Codemittel zum Erstellen eines Bearbeitungsprogramms aufweist, das zum Durchführen aller Schritte des Verfahrens nach einem der Ansprüche 1 bis 5 angepasst ist, wenn das Bearbeitungsprogramm auf der Steuerungseinrichtung (16) der Laserbearbeitungsmaschine (7) nach einem der Ansprüche 6 bis 8 abläuft.

**Claims**

**1.** Method for oblique laser beam cutting of a workpiece (1), wherein a flow (4) of cutting gas discharged from a cutting gas nozzle (3) is orientated at an oblique cutting angle (α) with respect to the workpiece surface (1a), and wherein the workpiece (1) and the laser cutting beam (2) are moved relative to each other during the oblique laser beam cutting operation, the oblique cutting angle ($\alpha$) extending perpendicularly relative to a direction of advance (Y), **characterised in that** the flow of cutting gas is a supersonic flow of cutting gas, and

that during the relative movement, the offset (e) between the laser cutting beam (2) and the nozzle axis (3a) on the workpiece surface (1a) and thus the position (P) of the laser cutting beam (2) on the workpiece surface (1a) is adjusted in dependence on the oblique cutting angle ($\alpha$), the distance (a) between the cutting gas nozzle (3) and the workpiece surface (1a) as well as on the diameter (d) of the nozzle opening (3b) such that the laser cutting beam (2) strikes the workpiece surface (1a) in a high-pressure region (5) formed within the supersonic flow (4) of cutting gas, in which high-pressure region the supersonic flow (4) of cutting gas strikes the workpiece surface (1a) substantially perpendicularly, wherein, in order to adjust the position (P) of the laser cutting beam (2), the distance (a) between the cutting gas nozzle (3) and the workpiece (1) is determined during the oblique laser beam cutting operation and in order to determine the distance (a), the capacitance between the cutting gas nozzle (3) and the workpiece (1) is measured, the influence of the oblique cutting angle ($\alpha$) on the capacitance being taken into account when determining the distance (a).

2. Method according to claim 1, wherein the laser cutting beam (2) and the nozzle axis (3a) of the cutting gas nozzle (3) are orientated parallel with each other and the position of the laser cutting beam (2) on the workpiece surface (1a) is adjusted by changing the offset (e) between the laser cutting beam (2) and the nozzle axis (3a).

3. Method according to any one of the preceding claims, wherein the laser cutting beam (2) and the nozzle axis (3a) of the cutting gas nozzle (3) are not orientated in a parallel manner and the position (P) of the laser cutting beam (2) on the workpiece surface (1a) is preferably adjusted by means of skewed focusing of the laser cutting beam (2).

4. Method according to claim 3, wherein, for skewed focusing of the laser cutting beam (2), a focusing element (13) and/or a redirecting mirror (12a) which is arranged upstream of the focusing element (13) in the beam path of the laser cutting beam (2) is tilted.

5. Method according to any one of the preceding claims, wherein the laser cutting beam (2) is focused with a distance of more than 50%, preferably more than 70%, of the thickness (D) of the workpiece (1) below the workpiece upper side (1a).

6. Laser processing machine (7) for oblique laser beam cutting of a workpiece (1), comprising:

a cutting gas nozzle (3) which can be orientated at an oblique cutting angle ($\alpha$) relative to a workpiece surface (1a) for producing a flow (4) of cutting gas, a movement device (11a, 14) for moving the workpiece (1) and the laser cutting beam (2) relative to each other at an oblique cutting angle ($\alpha$) which extends perpendicularly relative to a direction of advance (Y), a laser processing head (9) for positioning a laser cutting beam (2) at a position (P) on the workpiece surface (1a), **characterised by** the cutting gas nozzle which is adapted for generating a supersonic flow of cutting gas, an adjustment device (15, 17, 19) for adjusting the offset (e) between the laser cutting beam (2) and the nozzle axis (3a) on the workpiece surface (1a) and thus the position (P) of the laser cutting beam (2) on the workpiece surface (1a) relative to the supersonic flow (4) of cutting gas, and

a control device (16) which is configured to adjust the offset (e) between the laser cutting beam (2) and the nozzle axis (3a) on the workpiece surface (1a) and thus the position (P) of the laser cutting beam (2) on the workpiece surface (1a) in dependence on the oblique cutting angle ($\alpha$), the distance (a) between the cutting gas nozzle (3) and the workpiece surface (1a) as well as on the diameter (d) of the nozzle opening (3b) such that the laser cutting beam (2) remains in a high-pressure region (5) formed within the supersonic cutting gas flow (4) during the relative movement, in which high-pressure region the supersonic flow (4) of cutting gas strikes the workpiece surface (1a) substantially perpendicularly, further comprising:

a distance measuring device (6) for measuring the distance between the cutting gas nozzle (3) and the workpiece (1) which is configured to measure the capacitance between the cutting gas nozzle (3) and the workpiece (1) and to determine the distance (a) taking into account the influence of the oblique cutting angle ($\alpha$) on the capacitance.

7. Laser processing machine according to claim 6, wherein the adjustment device (15, 17, 19) has a displacement device (15) for adjusting the position (P) of the laser cutting beam (2) on the workpiece surface (1a) by changing the offset (e) between the nozzle axis (3a) of the cutting gas nozzle (3) and the laser cutting beam (2) which is orientated parallel with the nozzle axis (3a).

8. Laser processing machine according to any one of claims 6 or 7, wherein the adjustment device (15, 17, 19) has a tilting device (17) for tilting a focusing element (13) and/or a redirecting mirror (12a) which is arranged in the beam path of the laser cutting beam (2) upstream of the focusing element (13) in order to adjust the position (P) of the laser cutting beam (2) on the workpiece surface (1a) by means of skewed focusing.

9. Computer program product which has encoding means for setting up a processing program, which is adapted to carry out all the steps of the method according to any one of claims 1 to 5, when the processing program is run on the control device (16) of the laser processing machine (7) according to any one of claims 6 to 8.

## Revendications

1. Procédé de coupe oblique au faisceau laser d'une pièce (1), dans lequel un courant de gaz de coupe (4) sortant d'une buse de gaz de coupe (3) est orienté à un angle de coupe oblique ($\alpha$) par rapport à la surface de pièce (1a), et dans lequel la pièce (1) et le faisceau de coupe laser (2) sont déplacés l'une par rapport à l'autre lors de la coupe oblique au faisceau laser, l'angle de coupe oblique ($\alpha$) étant orthogonal à une direction d'avance (Y),
**caractérisé en ce que** le courant de gaz de coupe est un courant de gaz de coupe supersonique et que, pendant le déplacement relatif, le décalage (e) du faisceau de coupe laser (2) par rapport à l'axe de buse (3a) et donc la position (P) du faisceau de coupe laser (2) sur la surface de pièce (1a) sont réglés en fonction de l'angle de coupe oblique ($\alpha$), de la distance (a) entre la buse de gaz de coupe (3) et la surface de pièce (1a) ainsi que du diamètre (d) de l'ouverture de buse (3b) de sorte que le faisceau de coupe laser (2) rencontre la surface de pièce (1a) dans une plage de haute pression (5) formée à l'intérieur du courant de gaz de coupe supersonique (4), dans laquelle le courant de gaz de coupe supersonique (4) rencontre la surface de pièce (1a) sensiblement perpendiculairement, sachant que pour régler la position (P) du faisceau de coupe laser (2), la distance (a) entre la buse de gaz de coupe (3) et la pièce (1) est déterminée pendant la coupe oblique au faisceau laser et que pour déterminer la distance (a), la capacité entre la buse de gaz de coupe (3) et la pièce (1) est mesurée, l'influence de l'angle de coupe oblique ($\alpha$) sur la capacité étant prise en compte lors de la détermination de la distance (a).

2. Procédé selon la revendication 1, dans lequel le faisceau de coupe laser (2) et l'axe de buse (3a) de la buse de gaz de coupe (3) sont orientés parallèlement et la position du faisceau de coupe laser (2) sur la surface de pièce (1a) est réglée par modification du décalage (e) du faisceau de coupe laser (2) par rapport à l'axe de buse (3a).

3. Procédé selon une des revendications précédentes, dans lequel le faisceau de coupe laser (2) et l'axe de buse (3a) de la buse de gaz de coupe (3) ne sont pas orientés parallèlement et de préférence la position (P) du faisceau de coupe laser (2) sur la surface de pièce (1a) est réglée par focalisation oblique du faisceau de coupe laser (2).

4. Procédé selon la revendication 3, dans lequel, pour la focalisation oblique du faisceau de coupe laser (2), un élément focalisant (13) et/ou un miroir de déviation (12a) disposé avant l'élément focalisant (13) dans le chemin optique du faisceau de coupe laser (2) est basculé.

5. Procédé selon une des revendications précédentes, dans lequel le faisceau de coupe laser (2) est focalisé à une distance supérieure à 50 %, de préférence supérieure à 70 % de l'épaisseur (D) de la pièce (1) sous la face supérieure de la pièce (1a).

6. Machine d'usinage au laser (7) pour la coupe oblique au faisceau laser d'une pièce (1), comprenant :

une buse de gaz de coupe (3) pour générer un courant de gaz de coupe (4), orientable à un angle de coupe oblique ($\alpha$) par rapport à une surface de pièce (1a), un dispositif de déplacement (11a, 14) pour déplacer la pièce (1) et le faisceau de coupe laser (2) l'une par rapport à l'autre à l'angle de coupe oblique ($\alpha$) orthogonal à une direction d'avance (Y), une tête d'usinage au laser (9) pour positionner un faisceau de coupe laser (2) à une position (P) sur la surface de pièce (1a), **caractérisée par** la buse de gaz de coupe qui est apte à générer un courant de gaz de coupe supersonique, un dispositif de réglage (15, 17, 19) pour régler le décalage (e) du faisceau de coupe laser (2) par rapport à l'axe de buse (3a) et donc la position (P) du faisceau de coupe laser (2) sur la surface de pièce (1a) par rapport au courant de gaz de coupe supersonique (4), et un dispositif de commande (16) qui est conçu pour régler le décalage (e) du faisceau de coupe laser (2) par rapport à l'axe de buse (3a) sur la surface de pièce (1a) et donc la position (P) du faisceau de coupe laser (2) sur la surface de pièce (1a) en fonction de l'angle de coupe oblique (α), de la distance (a) entre la buse de gaz de coupe (3) et la surface de pièce (1a) ainsi que du diamètre (d) de l'ouverture de buse (3b), de sorte que le faisceau de coupe laser (2) reste, lors du déplacement relatif, dans une plage de haute pression (5) formée à l'intérieur du courant de gaz de coupe supersonique (4), dans laquelle le courant de gaz de coupe supersonique (4) rencontre la surface de pièce (1a) sensiblement perpendiculairement, et comprenant en outre : un dispositif de mesure de distance pour mesurer la distance entre la buse de gaz de coupe (3) et la pièce (1), lequel est conçu pour mesurer la capacité entre la buse de gaz de coupe (3) et la pièce (1) et déterminer la distance (a) en tenant compte de l'influence de l'angle de coupe oblique (α) sur la capacité.

7. Machine d'usinage au laser selon la revendication 6, dans laquelle le dispositif de réglage (15, 17, 19) présente un dispositif de déplacement (15) pour régler la position (P) du faisceau de coupe laser (2) sur la surface de pièce (1a) par modification de la distance (e) entre l'axe de buse (3a) de la buse de gaz de coupe (3) et le faisceau de coupe laser (2) orienté parallèlement à l'axe de buse (3a).

8. Machine d'usinage au laser selon une des revendications 6 ou 7, dans laquelle le dispositif de réglage (15, 17, 19) présente un dispositif de basculement (17) pour basculer un élément focalisant (13) et/ou un miroir de déviation (12a) disposé avant l'élément focalisant (13) dans le chemin optique du faisceau de coupe laser (2), pour régler la position (P) du faisceau de coupe laser (2) sur la surface de pièce (1a) par focalisation oblique.

9. Produit programme d'ordinateur, lequel présente des moyens de codage pour générer un programme de traitement qui est adapté pour réaliser toutes les étapes du procédé selon une des revendications 1 à 5 lorsque le programme de traitement s'exécute sur le dispositif de commande (16) de la machine d'usinage au laser (7) selon une des revendications 6 à 8.

Fig. 1a

Fig. 1b

α=0°

**Fig. 2a**

α=30°

**Fig. 2b**

α=45°

**Fig. 2c**

Fig. 3a

Fig. 3b

Fig. 4a

Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 05057470 B
- EP 0873813 B1
- EP 1684046 A1

**In der Beschreibung aufgeführte Nicht-Patentliteratur**

- **J. WILLACH et al.** Melt Expulsion by a Coaxial Gas Jet in Trepanning of CMSX-4 with Microsecond Nd:YAG Laser Radiation. *Proceedings of the SPIE,* vol. 5063, 435-440